# EUROPEAN PATENT SPECIFICATION

(11) **EP 2 411 436 B1**
(45) Date of publication and mention of the grant of the patent: **20.02.2013**
(21) Application number: 10709611.7
(22) Date of filing: 08.03.2010
(51) Int. Cl.: C08G 18/40, C08G 18/42, C08G 18/48

(54) **PRODUCTION OF RIGID POLYURETHANE FOAMS AND THE USE THEREOF**
HERSTELLUNG VON STARREN POLYURETHANSCHAUMSTOFFEN UND IHRE VERWENDUNG
PRODUCTION DE MOUSSES POLYURÉTHANNE RIGIDES ET LEUR UTILISATION

(30) Priority: 24.03.2009 US 162862 P
(43) Date of publication of application: 01.02.2012
(73) Proprietor: Dow Global Technologies LLC, Midland, MI 48674 (US)
(72) Inventor: KRAMER, Hans, CH-8645 Kempraten-Jona (CH)
(74) Representative: Raynor, John
(86) International application number: PCT/US2010/026483
(87) International publication number: WO 2010/111021

(56) References cited:
- EP-A1- 1 894 955
- WO-A2-02/50161
- US-A- 5 677 359

## Description

This invention pertains to polyesters that are useful for manufacturing rigid polyurethane foams, the use of such polyesters in producing rigid foam as well as rigid foams made from those polyols.

Rigid polyurethane foams have been used widely for several decades as insulation foam in appliances and other applications, as well as a variety of other uses. These foams are prepared in a reaction of a polyisocyanate and one or more polyol, polyamine or aminoalcohol compounds. The polyol, polyamine or aminoalcohol compounds can be characterized as having equivalent weights per isocyanate-reactive group up to about 300 and an average of more than three isocyanate-reactive groups per molecule. The reaction is conducted in the presence of a blowing agent which generates a gas as the reaction proceeds. The gas expands the reacting mixture and imparts a cellular structure.

Originally, the blowing agent of choice was a "hard" chlorofluorcarbon (CFC) such as trichlorofluoromethane or dichlorodifluoromethane. These CFCs processed very easily and produced foam having very good thermal insulation properties. However, the CFC blowing agents have been phased out because of environmental concerns.

CFCs have been replaced with other blowing agents such as hydrofluorocarbons, low-boiling hydrocarbons, hydrochloroflurocarbons, ether compounds, and water (which reacts with isocyanates to generate carbon dioxide). For the most part, these alternative blowing agents are less effective thermal insulators than their CFC predecessors. The ability of a foam to provide thermal insulation is often expressed in terms of "k-factor", which is a measure of the amount of heat that is transferred through the foam per unit area per unit time, taking into account the thickness of the foam and the applied temperature difference across the foam thickness. Foams produced using alternative blowing agents tend to have higher k-factors than those produced using "hard" CFC blowing agents. This has forced rigid foam producers to modify their foam formulations in other ways to compensate for the loss of thermal insulation values that result from the changes in blowing agent. Many of these modifications focus on reducing cell size in the foam. Smaller-sized cells tend to provide better thermal insulation properties.

US 5 677 359 describes a rigid polyurethane formulation comprising a sucrose-dipropyleneglycol initiated polyether, toluenediamine initiated polyether and an aromatic polyester. Blowing agent is cyclopentane.

EP 1 894 955 deals with rigid foam formulations comprising an toluene diamine initiated polyether, an aromatic polyester having a functionality of 2,0 and a hydrofluorocarbon blowing agent.

It has been found that modifications to a rigid foam formulation which improve k-factor tend to affect the processing characteristics of the formulation in an undesirable way. The curing characteristics of the formulation are important, especially in pour-in-place application such as appliance foam. Refrigerator and freezer cabinets, for example, are usually insulated by partially assembling an exterior shell and interior liner, and holding them in position such that a cavity is formed between them. This is often done using a jig or other apparatus. The foam formulation is introduced into the cavity, where it expands to fill the cavity. The foam provides thermal insulation and imparts structural strength to the assembly. The way the foam formulation cures is important in at least two respects. First, the foam formulation must cure quickly to form a dimensionally stable foam, so that the finished cabinet can be removed from the jig. This characteristic is generally referred to as "demold" time, and directly affects the rate at which cabinets can be produced.

In addition, the curing characteristics of the system affect a property known as "flow index" or simply "flow". A foam formulation will expand to a certain density (known as the 'free rise density') if permitted to expand against minimal constraints. When the formulation must fill a refrigerator or freezer cabinet, its expansion is somewhat constrained in several ways. The foam must expand mainly in a vertical (rather than horizontal) direction within a narrow cavity. As a result, the formulation must expand against a significant amount of its own weight. The foam formulation also must flow around corners and into all portions of the wall cavities. In addition, the cavity often has limited or no venting, and so the atmosphere in the cavity exerts additional pressure on the expanding foam. Because of these constraints, a greater amount of the foam formulation is needed to fill the cavity than would be predicted from the free rise density alone. The amount of foam formulation needed to minimally fill the cavity can be expressed as a minimum fill density (the weight of the formulation divided by the cavity volume). The ratio of the minimum fill density to the free rise density is the flow index. The flow index is ideally 1.0, but is on the order of 1.5 in commercially practical formulations. Lower flow index is preferred to produce lower density foam for cold appliance applications.

Modifications to foam formulations that favor low k-factor tend to have an adverse effect on demold time, flow index or both. Therefore, although formulations have been developed which closely match conventional CFC-based formulations in k-factor, the overall cost of using these formulations is often higher due to lower productivity (because of greater demold times), higher raw materials costs (because of higher flow index) or both.

What is desired is a rigid foam formulation that provides a low k-factor foam and which provide for a low flow index and/or a short demold time.

The invention is a process for preparing a rigid polyurethane foam, comprising
A) forming a reactive mixture containing at least
   1) a polyol mixture containing
      a) from 7 to less than 20 weight percent of a polyester having a nominal functionality of at least 2.4 to 4 and an OH number of 200 to 500 mg KOH/g.
      b) from 10 to 50 weight percent of a polyol having a nominal hydroxyl functionality of 3 to 6 and an OH number of 250 to 600 mg KOH/g of the type:
         i) an aromatic amine initiated polyol;
         ii) a cylcoaliphatic amine initiated polyol;
         iii) a combination of i) and ii)
      c) from 25 to 60 weight percent of a polyether polyol having a nominal hydroxyl functionality of 6 to 8 and an OH number of 300 to 700 mg KOH/g,
   2) at least one hydrocarbon, hydrofluorocarbon, hydrochlorofluorocarbon, fluorocarbon, dialkyl ether or fluorine-substituted dialkyl ether physical blowing agent; and
   3) at least one polyisocyanate; and
B) subjecting the reactive mixture to conditions such that the reactive mixture expands and cures to form a rigid polyurethane foam.

In a further embodiment, the polyester comprises at least 10 weight percent of the polyol composition.

In another aspect, the invention is a rigid foam made in accordance with the foregoing process.

It has been found that rigid foam formulations that include the aforementioned polyol mixtures often exhibit desirable curing characteristics (as indicated by flow index of below 1.8 and short demold times), and cure to form a foam having excellent thermal insulation properties (i.e., low k-factor).

The invention provides a formulation and a process whereby a rigid polyurethane foam that shows particular utility in insulation applications, and particularly in molded and cavity-filling applications. Such applications include, for example, pipe in pipe, appliances, such as refrigerators, freezers, and hot water storage tanks.

Rigid polyurethane foam is prepared from a polyurethane-forming composition that contains at least (1) a polyol mixture that contains at least one high functional polyester polyol, at least one aromatic amine initiated polyols, at least one high functional polyether polyol (2) at least one organic polyisocyanate, and (3) at least one physical blowing agent as described more fully below.

The polyol mixtures for use in the present invention generally contains from 7 to less than 20% by weight, based on the weight of the polyol mixture, of at least one polyester polyol having a nominal functionality of 2.4 to 4 (an average of 2.4 to 4 hydroxyl groups per molecule) and an OH-number of 200 to 500 mg KOH/g. In another embodiment, the polyol mixture contains from 10 to less than 20% by weight, based on the weight of the polyol mixture. In a further embodiment the polyester polyol has a nominal functionality of 2.5 or 2.6 and greater. In another embodiment, the polyester has a nominal functionality of less than 3.5, and in a further embodiment 3 or less. In yet another embodiment, the polyester has a nominal functionality of 2.6 to 2.8. In one embodiment the polyester polyol comprises from 12 to 18 weight percent of the polyol mixture.

The polyesters are produced by reaction of polyfunctional acid or anhydride compounds with polyfunctional alcohols. Typical compounds include dicarboxylic acids and anhydrides, however; acids or anhydrides with higher functionality may also be used. Illustrative examples of acid or anhydride functional compounds suitable for forming the polyesters include phthalic acid, phthalic anhydride, isophthalic acid, terephthalic acid, terephthalic anhydride, dimethylterephtalate, polyethyleneterephtalate, hexahydrophthalic acid, tetrachlorophthalic anhydride, hexahydrophthalic anhydride, pyromellitic anhydride, succinic acid, azeleic acid, adipic acid, 1,4-cyclohexanedicarboxylic acid, citric acid, fumaric acid, maleic acid, maleic acid anhydride, and trimellitic anhydride. In a further embodiment the acid or anhydride is phthalic acid, phthalic anhydride, isophthalic acid, terephthalic acid, terephthalic anhydride, succinic acid or adipic acid. A combination of the above the above-listed acids and anhydrides may also be used.

The polyfunctional alcohols used in the production of the polyesters generally contain a hydrocarbon chain having 3 to 12 carbon atoms. In a further embodiment the alcohols has a hydrocarbon chain of 3 to 9 carbon atoms. The hydrocarbon chain may be straight, branched chain or cyclic hydrocarbons. The alcohols used producing the polyesters is generally a blend of at least one alcohol having hydroxyl functionality of at least two and at least one alcohol having a hydroxyl functionality of 3 or greater. Generally to avoid excess cross-linking, alcohols having a functionality of greater than 3 constitute less than 20% by weight of the alcohol used in making the polyester. In a further embodiment such higher functional alcohols are less than 15% by weight of the alcohols used in producing the polyester polyol. Illustrative examples of bifunctional alcohols include propane diol, butane diol, pentane diol, hexane diol, 2,2-dimethyl-1,3-propane diol, cyclohexane diol, cyclohexane dimethanol, ethylene glycol, propylene glycol, butylene glycol, diethylene glycol, triethylene glycol, ethanol amine and diethanolamine. Illustrative example of tri-functional alcohols include glycerol, trimethylol propane (TMP), trimethylolethane and triethanolamine. Higher alcohols include pentaerythritol, ethylenediamine and sorbitol. In one embodiment, a blend of diethylene glycol and glycerol are used with a polyfunctional acid or anhydride to producing a polyester.

The ratio of bifunctional to higher functional alcohols to obtain a polyester with a functionality of 2.5 to 4 can be readily determined by those of ordinary skill in the art. Methods for making the polyester are well-known. Polyesters are typically formed by heating together the alcohol and polyfunctional acid or anhydride components, with or without catalysts, while removing the by-product water in order to drive the reaction to completion. The polyesters are advantageously prepared by polycondensing the organic polycarboxylic acid or anhydride with a polyfunctional alcohol in a molar ratio of from 1:1 to 1:1.8; preferable from 1:1.05 to 1:2. The molar ratio of the diol to the higher alcohols is preferably 4:1 or less. A small amount of solvent, such as toluene, may be added in order to remove the water azeotropically. If added, such solvent is typically removed from the polyester product before use.

A further component of the polyol composition is a polyether polyol (b) wherein the initiator has 3 to 6 reactive hydrogens and is i) an aromatic amine; ii) a cyclo-aliphatic amine; or iii) a combination thereof. The amount of such polyol b) is present in an amount of from 10 to 50 weight percent of the total polyol composition. In another embodiment, amine polyol component is present in an amount of 40 weight percent or less of the total polyol composition. In a further embodiment the amine polyol is present in an amount of 30 weight percent or less of the polyol composition. In another embodiment the aromatic polyol is present is an amount of 25 weight percent or less of the total polyol composition. In one embodiment the amine polyol is at least 12 weight percent of the polyol composition.

Examples of suitable aromatic amine initiators include 1,2-, 1,3- and 1,4-phenylenediamine; 2,3-, 2,4-, 3,4- and 2,6-toluene diamine; 4,4'-, 2,4'- and 2,2'-diaminodiphenylmethane; polyphenyl-polymethylene-polyamine. In one embodiment polyol component (b) is a toluene diamine (TDA)-initiated polyol, and even more preferably wherein at least 85 weight percent of the TDA is ortho-TDA.

Examples of suitable cyclo-aliphatic amine initiators include aminocyclohexanealkylamine as disclosed in WO 2008/094239; cyclohexanemethanamine, 4-amino-α,α,4-trimethyl-(9Cl), which is also known as p-menthane-1,8-diamine or 1,8-diamino-p-menthane; isophorone diamine or 1,8-diamino-p-menthane; ortho-cyclohexanediamine; 1,4 cyclohexanediamine , 2 or 4 methylcyclohexane-1,3-diamine , diastereoisomeric forms, as disclosed in WO 2008/094963; ; methylene(biscyclohexylamine) amine initiators as disclosed in provisional patent application filed June 10, 2008, Serial Number 61/060236, and 1,3- or 1,4-bis(aminomethyl) cyclohexaneamine initiators as disclosed in provisional patent application filed June 17, 2008, Serial Number 61/076,491, and 4,4' methylenebis(2-methylcyclohexanamine.

Sufficient alkylene oxide(s), such as ethylene oxide, propylene oxide, butylene oxide or a combination thereof, are added to the amine initiator to produce a polyol having the desired hydroxyl number. The polyol component (b) generally has a hydroxyl number of 250 to 600 mg KOH/g. In a further embodiment, the polyol component (b) has a hydroxyl number of 300 to 500 mg KOH/g.

The alkoxylation reaction is conveniently performed by forming a mixture of the alkylene oxide(s) and the initiator compound, and subjecting the mixture to conditions of elevated temperature and superatmospheric pressure. Polymerization temperatures may be, for example, from 110 to 170ºC, and pressures may be, for example, from 2 to 10 bar (200 to 1000 kPa). A catalyst may be used, particularly if more than one mole of alkylene oxide(s) is to be added per equivalent of amine hydrogen on the initiator compound. Suitable alkoxylation catalysts include strong bases such as alkali metal hydroxides (sodium hydroxide, potassium hydroxide, cesium hydroxide, for example), as well as the so-called double metal cyanide catalysts (of which zinc hexacyanocobaltate complexes are most notable). The reaction can be performed in two or more stages, in which no catalyst is used in the first stage, and from 0.5 to 1.0 mole of alkylene oxide is added to the initiator per equivalent of amine hydrogens, followed by one or more subsequent stages in which additional alkylene oxide is added in the presence of a catalyst as described. After the reaction is completed, the catalyst may be deactivated and/or removed. Alkali metal hydroxide catalysts may be removed, left in the product, or neutralized with an acid and the residues left in the product. Residues of double metal cyanide catalysts may be left in the product, but can be removed instead if desired.

The formulations of the present invention further comprises from 25 to 60 weight percent of a non-amine polyether polyol having a nominal hydroxyl functionality of 6 to 8 and an OH-number of 300 to 700 mg KOH/g. Such polyols are obtained by the addition polymerisation of alkylene oxides as described above with polyhydric alcohol starter compounds having 6 to 8 reactive groups. Examples of such polyhydric alcohols include sorbitol, sucrose, glucose, fructose, lactose or other sugars. In one embodiment the starter compound is sorbitol or sucrose. These polyhydric alcohols as well as mixtures of these alcohols with water, glycerol, propylene glycol, ethylene glycol or diethylene glycol, by be used as starter compounds. When used with a co-initiator, the co-initiator will comprise 20 mole percent or less of the total initiator.

Examples of suitable sorbitol- or sucrose/glycerine-initiated polyethers that can be used include Voranol™ 360, Voranol™ RN411, Voranol™ RN490, Voranol™370, Voranol™ 446, Voranol™ 520, Voranol™ 550, Voranol™ RN 482 and Tercarol™ RF 55 polyols, all available from The Dow Chemical Company.

The polyol mixture may contain polyols in addition to those already described. The initiator compound(s) may include alkylene glycols (e.g., ethylene glycol, propylene glycol, 1,4-butane diol, 1,6-hexanediol and the like), glycol ethers (such as diethylene glycol, triethylene glycol, dipropylene glycol, tripropylene glycol and the like), glycerine, trimethylolpropane, or pentaerythritol. A portion of the initiator compound may be one containing primary and/or secondary amino groups, such as ethylene diamine, hexamethylene diamine, diethanolamine, monoethanolamine, N-methyldiethanolamine, piperazine, aminoethylpiperazine, diisopropanolamine, monoisopropanolamine, methanolamine, dimethanolamine, and the like. Amine-initiated polyols of these types tend to be somewhat autocatalytic. The alkylene oxide of choice is propylene oxide, or a mixture of propylene oxide and ethylene oxide. Another compound can be a Mannich condensate of phenol, formaldehyde and dialkanolamine.

The polyurethane-forming composition contains at least one organic polyisocyanate. The organic polyisocyanate or mixture thereof advantageously contains an average of at least 2.5 isocyanate groups per molecule. A preferred isocyanate functionality is from about 2.5 to about 3.6 or from about 2.6 to about 3.3 isocyanate groups/molecule. The polyisocyanate or mixture thereof advantageously has an isocyanate equivalent weight of from about 130 to 200. This is preferably from 130 to 185 and more preferably from 130 to 170. These functionality and equivalent weight values need not apply with respect to any single polyisocyanate in a mixture, provided that the mixture as a whole meets these values.

Suitable polyisocyanates include aromatic, aliphatic and cycloaliphatic polyisocyanates. Aromatic polyisocyanates are generally preferred. Exemplary polyisocyanates include, for example, m-phenylene diisocyanate, 2,4- and/or 2,6-toluene diisocyanate (TDI), the various isomers of diphenylmethanediisocyanate (MDI), hexamethylene-1,6-diisocyanate, tetramethylene-1,4-diisocyanate, cyclohexane-1,4-diisocyanate, hexahydrotoluene diisocyanate, hydrogenated MDI (H₁₂ MDI), naphthylene-1,5-diisocyanate, methoxyphenyl-2,4-diisocyanate, 4,4'-biphenylene diisocyanate, 3,3'-dimethyoxy-4,4'-biphenyl diisocyanate, 3,3'-dimethyldiphenylmethane-4,4'-diisocyanate, 4,4',4"-triphenylmethane diisocyanate, polymethylene polyphenylisocyanates, hydrogenated polymethylene polyphenyl polyisocyanates, toluene-2,4,6-triisocyanate and 4,4'-dimethyldiphenylmethane-2,2',5,5'-tetraisocyanate. Preferred polyisocyanates are the so-called polymeric MDI products, which are a mixture of polymethylene polyphenylene polyisocyanates in monomeric MDI. Especially suitable polymeric MDI products have a free MDI content of from 5 to 50% by weight, more preferably 10 to 40% by weight. Such polymeric MDI products are available from The Dow Chemical Company under the trade names PAPI and Voranate.

An especially preferred polyisocyanate is a polymeric MDI product having an average isocyanate functionality of from 2.6 to 3.3 isocyanate groups/molecule and an isocyanate equivalent weight of from 130 to 170. Suitable commercially available products of that type include PAPI™ 27, Voranate™ M229, Voranate™ M 220, Voranate™ M595, Voranate™ M600, Voranate™ M647 and Voratec™ SD 100 Iso, all from The Dow Chemical Company.

Isocyanate-terminated prepolymers and quasi-prepolymers (mixtures of prepolymers with unreacted polyisocyanate compounds) can also be used. These are prepared by reacting a stoichiometric excess of an organic polyisocyanate with a polyol, such as the polyols described above. Suitable methods for preparing these prepolymers are well known. Such a prepolymer or quasi-prepolymer preferably has an isocyanate functionality of from 2.5 to 3.6 and an isocyanate equivalent weight of from 130 to 200.

The polyisocyanate is used in an amount sufficient to provide an isocyanate index of from 90 to180. Isocyanate index is calculated as the number of reactive isocyanate groups provided by the polyisocyanate component divided by the number of isocyanate-reactive groups in the polyurethane-forming composition (including those contained by isocyanate-reactive blowing agents such as water) and multiplying by 100. Water is considered to have two isocyanate-reactive groups per molecule for purposes of calculating isocyanate index. A preferred isocyanate index is from 100 to 160 and a more preferred isocyanate index is from 105 to 150.

The blowing agent used in the polyurethane-forming composition includes at least one physical blowing agent which is a hydrocarbon, hydrofluorocarbon, hydrochlorofluorocarbon, fluorocarbon, dialkyl ether or fluorine-substituted dialkyl ethers, or a mixture of two or more thereof. Blowing agents of these types include, for example, propane, isopentane, n-pentane, n-butane, isobutene, isobutene, cyclopentane, cyclo hexane, dimethyl ether, 1,1-dichloro-1-fluoroethane (HCFC-141b), chlorodifluoromethane (HCFC-22), 1-chloro-1,1-difluoroethane (HCFC-142b), 1,1,1,2-tetrafluoroethane (HFC-134a), 1,1,1,3,3-pentafluorobutane (HFC-365mfc), 1,1-difluoroethane (HFC-152a), 1,1,1,2,3,3,3-heptafluoropropane (HFC-227ea) and 1,1,1,3,3-pentafluoropropane (HFC-245fa). The hydrocarbon and hydrofluorocarbon blowing agents are preferred. In some embodiments, a hydrocarbon blowing agent, such as cyclopentane, is uses as a physical blowing agent. It is generally preferred to further include water in the formulation, in addition to the physical blowing agent.

Blowing agent(s) are preferably used in an amount such that the formulation cures to form a foam with a molded density of from 15 to 100 kg/m³, preferably from 20 to 65 kg/m³ and especially from 25 to 45 kg/m³. To achieve these densities, the hydrocarbon or hydrofluorocarbon blowing agent conveniently is used in an amount ranging from about 8 to about 40, preferably from about 10 to about 35, parts by weight per 100 parts by weight polyol(s). Water reacts with isocyanate groups to produce carbon dioxide, which acts as an expanding gas. Water is suitably used in an amount within the range of 0.5 to 3.5, preferably from 1.0 to 3.0 parts by weight per 100 parts by weight of polyol(s).

The polyurethane-forming composition typically will include at least one catalyst for the reaction of the polyol(s) and/or water with the polyisocyanate. Suitable urethane-forming catalysts include those described by U.S. Pat. No. 4,390,645 and in WO 02/079340. Representative catalysts include tertiary amine and phosphine compounds, chelates of various metals, acidic metal salts of strong acids; strong bases, alcoholates and phenolates of various metals, salts of organic acids with a variety of metals, organometallic derivatives of tetravalent tin, trivalent and pentavalent As, Sb and Bi and metal carbonyls of iron and cobalt.

Tertiary amine catalysts are generally preferred. Among the tertiary amine catalysts are dimethylbenzylamine (such as Desmorapid™ DB from Rhine Chemie), 1,8-diaza (5,4,0)undecane-7 (such as Polycat™ SA-1 from Air Products), pentamethyldiethylenetriamine (such as Polycat™ 5 from Air Products), dimethylcyclohexylamine (such as Polycat™ 8 from Air Products), triethylene diamine (such as Dabco™ 33LV from Air Products), dimethyl ethyl amine, n-ethyl morpholine, N-alkyl dimethylamine compounds such as N-ethyl N,N-dimethyl amine and N-cetyl N,N-dimethylamine, N-alkyl morpholine compounds such as N-ethyl morpholine and N-coco morpholine, and the like. Other tertiary amine catalysts that are useful include those sold by Air Products under the trade names Dabco™ NE1060, Dabco™ NE1070, Dabco™ NE500, Dabco™ TMR, Dabco™ TMR-2, Dabco™ TMR 30, Polycat™ 1058, Polycat™ 11, Polycat™ 15, Polycat™ 33, Polycat™ 41 and Dabco™ MD45, and those sold by Huntsman under the trade names ZR 50 and ZR 70. In addition, certain amine-initiated polyols can be used herein as catalyst materials, including those described in WO 01/58976 A. Mixtures of two or more of the foregoing can be used.

The catalyst is used in catalytically sufficient amounts. For the preferred tertiary amine catalysts, a suitable amount of the catalysts is from about 0.5 to about 4 parts, especially from about 1 to about 3 parts, of tertiary amine catalyst(s) per 100 parts by weight of the polyol(s).

Other type of catalysts, often referred to as trimerisation catalysts, might be useful as well. These include for instance structures like Dabco™K2097 and Dabco™ K-15.

The polyurethane-forming composition also preferably contains at least one surfactant, which helps to stabilize the cells of the composition as gas evolves to form bubbles and expand the foam. Examples of suitable surfactants include alkali metal and amine salts of fatty acids, such as sodium oleate, sodium stearate sodium ricinolates, diethanolamine oleate, diethanolamine stearate, diethanolamine ricinoleate, and the like: alkali metal and amine salts of sulfonic acids, such as dodecylbenzenesulfonic acid and dinaphthylmethanedisulfonic acid; ricinoleic acid; siloxane-oxalkylene polymers or copolymers and other organopolysiloxanes; oxethylated alkylphenols (such as Tergitol™ NP9 and Triton™ X100, from The Dow Chemical Company); oxyethylated fatty alcohols such as Tergitol ™15-S-9, from The Dow Chemical Company; paraffin oils; castor oil; ricinoleic acid esters; turkey red oil; peanut oil; paraffins; fatty alcohols; dimethyl polysiloxanes and oligomeric acrylates with polyoxyalkylene and fluoroalkane side groups. These surfactants are generally used in amount of 0.01 to 6 parts by weight based on 100 parts by weight of the polyol.

Organosilicone surfactants are generally preferred types. A wide variety of these organosilicone surfactants are commercially available, including those sold by Evonik under the Tegostab™ name (such as Tegostab™ B-8462, B8427 and B8474 surfactants), those sold by Momentive Performance Materials Inc.under the Niax™ name (such as Niax™ L6900 and L6988 surfactants) as well as various surfactant products commercially available from Air Products and Chemicals, such as Dabco™ DC-5598 surfactant.

In addition to the foregoing ingredients, the polyurethane-forming composition may include various auxiliary components, such as fillers, colorants, odor masks, flame retardants, biocides, antioxidants, UV stabilizers, antistatic agents, viscosity modifiers, and the like.

Examples of suitable flame retardants include phosphorus compounds, halogen-containing compounds and melamine.

Examples of fillers and pigments include calcium carbonate, titanium dioxide, iron oxide, chromium oxide, azo/diazo dyes, phthalocyanines, dioxazines, recycled rigid polyurethane foam and carbon black.

Examples of UV stabilizers include hydroxybenzotriazoles, zinc dibutyl thiocarbamate, 2,6-ditertiarybutyl catechol, hydroxybenzophenones, hindered amines and phosphites.

Except for fillers, the foregoing additives are generally used in small amounts, such as from 0.01 percent to 3 percent each by weight of the polyurethane formulation. Fillers may be used in quantities as high as 50% by weight of the polyurethane formulation.

The polyurethane-forming composition is prepared by bringing the various components together under conditions such that the polyol(s) and isocyanate(s) react, the blowing agent generates a gas, and the composition expands and cures. All components (or any sub-combination thereof) except the polyisocyanate can be pre-blended into a formulated polyol composition, if desired, which is then mixed with the polyisocyanate when the foam is to be prepared. The components may be preheated if desired, but this is usually not necessary, and the components can be brought together at about room temperature (~22ºC) to conduct the reaction. It is usually not necessary to apply heat to the composition to drive the cure, but this may be done if desired, too.

The invention is particularly useful in so-called "pour-in-place" applications, in which the polyurethane-forming composition is dispensed into a cavity and foams within the cavity to fill it and provide structural and/or thermal insulative attributes to an assembly. The nomenclature "pour-in-place" refers to the fact that the foam is created at the location where it is needed, rather than being created in one step and later assembled into place in a separate manufacturing step. Pour-in-place processes are commonly used to make appliance products such as refrigerators, freezers, and coolers and similar products which have walls that contain thermal insulation foam. The presence of the amine-initiated polyol in the polyurethane-forming composition tends to provide the formulation with good flow and short demold times, while at the same time producing a low k-factor foam.

The walls of appliances such as refrigerators, freezers and coolers are most conveniently insulated in accordance with the invention by first assembling an outer shell and in interior liner together, such that a cavity is formed between the shell and liner. The cavity defines the space to be insulated as well as the dimensions and shape of the foam that is produced. Typically, the shell and liner are bonded together in some way, such as by welding, melt-bonding or through use of some adhesive (or some combination of these) prior to introduction of the foam formulation. The shell and liner may be supported or held in the correct relative positions using a jig or other apparatus. One or more inlets to the cavity are provided, through which the foam formulation can be introduced. Usually, one or more outlets are provided to allow air in the cavity to escape as the cavity is filled with the foam formulation and the foam formulation expands.

The materials of construction of the shell and liner are not particularly critical, provided that they can withstand the conditions of the curing and expansion reactions of the foam formulation. In most cases, the materials of construction will be selected with regard to specific performance attributes that are desired in the final product. Metals such as steel are commonly used as the shell, particularly in larger appliances such as freezers or refrigerators. Plastics such as polycarbonates, polypropylene, polyethylene styrene-acrylonitrile resins, acrylonitrile-butadienestyrene resins or high-impact polystyrene are used more often to make shells for smaller appliances (such as coolers) or those in which low weight is important. The liner may be a metal, but is more typically a plastic as just described.

The foam formulation is then introduced into the cavity. The various components of the foam formulation are mixed together and the mixture introduced quickly into the cavity, where the components react and expand. It is common to pre-mix the polyol(s) together with the water and blowing agent (and often catalyst and/or surfactant as well) to produce a formulated polyol. The formulated polyol can be stored until it is time to prepare the foam, at which time it is mixed with the polyisocyanate and introduced into the cavity. It is usually not required to heat the components prior to introducing them into the cavity, nor it is usually required to heat the formulation within the cavity to drive the cure, although either or both of these steps may be taken if desired. The shell and liner may act as a heat sink in some cases, and remove heat from the reacting foam formulation. If necessary, the shell and/or liner can be heated somewhat (such as up to 50ºC and more typically 35-40ºC) to reduce this heat sink effect or to drive the cure.

Enough of the foam formulation is introduced such that, after it has expanded, the resulting foam fills those portions of the cavity where foam is desired. Most typically, essentially the entire cavity is filled with foam. It is generally preferred to "overpack" the cavity slightly, by introducing more of the foam formulation than is minimally needed to fill the cavity, thereby increasing the foam density slightly. The overpacking provides benefits such as better dimensional stability of the foam, especially in the period following demold. Generally, the cavity is overpacked by from 4 to 35% by weight. The final foam density for most appliance applications is preferably in the range of from 25 to 45 kg/m³.

After the foam formulation has expanded and cured enough to be dimensionally stable, the resulting assembly can be "demolded" by removing it from the jig or other support that is used to maintain the shell and liner in their correct relative positions. Short demold times are important to the appliance industry, as shorter demold times allow more parts to be made per unit time on a given piece of manufacturing equipment..

Demold times can be evaluated as follows: A 28-liter "jumbo" Brett mold coated with release agent is conditioned to a temperature of 45°C. A foam formulation is injected into the mold in order to obtain a foam at an overpack level of 115%. After a certain period, the foam is removed from the mold and the thickness of the foam is measured. After a further 24 hours, the foam thickness is re-measured. The difference between the thickness after 24 hours and the initial thickness is an indication of the post-demold expansion of the foam. The demold time is considered to be sufficiently long if the post-demold expansion is no more than 4 mm on this test.

As mentioned, flow is another important attribute of the foam formulation. For purposes of this invention, flow is evaluated using a rectangular "Brett" mold, having dimensions of 200 cm X 20 cm X 5 cm (~6'6" X 8" X 2"). The polyurethane-forming composition is formed, and immediately injected into the Brett mold, which is oriented vertically (i.e., 200 cm direction oriented vertically) and preheated to 45 ± 5ºC. The composition is permitted to expand against its own weight and cure inside the mold. The amount of polyurethane-forming composition is selected such that the resulting foam just fills the mold. The density of the resulting foam is then measured and compared with the density of a free-rise foam made from the same formulation (by injecting the formulation into a plastic bag or open cardboard box where it can expand freely vertically and horizontally against atmospheric pressure). The ratio of the Brett mold foam density to the free rise density is considered to represent the "flow index" of the formulation. With this invention, flow index values are typically below 1.8 and preferably from 1.2 to 1.5.

The polyurethane foam advantageously exhibits a low k-factor. The k-factor of a foam may depend on several variables, of which density is an important one. For many applications, a rigid polyurethane foam having a density of from 28 to 40 kg/m³ (1.8 to 2.5 pounds/cubic foot) exhibits a good combination of physical properties, dimensional stability, and cost. Foam in accordance with the invention, having a density within that range, preferably exhibits a 10ºC k-factor of no greater than 20 preferably no greater than 19.5, and more preferably no greater than 19.0 mW/m-ºK. Higher density foam may exhibit a somewhat higher k-factor.

In addition to the appliance and thermal insulation foams described above, the invention is also useful to produce vehicle noise dampening foams, one or more layers of a laminated board, pipe insulation and other foam products. The invention is of special interest when a rapid cure is wanted, and or good thermal insulating properties are wanted in the foam.

If desired, the process of the invention can be practiced in conjunction with the methods described, for example, in WO 07/058793, in which the reaction mixture is injected into a closed mold cavity which is at a reduced pressure.

The following examples are provided to illustrate the invention, but are not intended to limit the scope thereof. All parts and percentages are by weight unless otherwise indicated.

A description of the raw materials used in the examples is as follows.
- VORANOL* RN482: is propoxylated sorbitol with an OH-number of approximately 480 mg KOH/g, available from The Dow Chemical Company
- VORANOL CP1055: is propoxylated glycerin with an OH-number of approximately 156 mg KOH/g, available from The Dow Chemical Company.
- VORANOL RA500: is propoxylated ethylene diamine with an OH-number of approximately 500 mg KOH/g , available from The Dow Chemical Company
- VORANOL RA640: is propoxylated ethylene diamine with an OH-number of approximately 640 mg KOH/g , available from The Dow Chemical Company.
- VORANOL 1010L: is a poly propylene glycol with an OH number of approximately 110 mg KOG/g, available from The Dow Chemical Company.
- TERCARCOL* 5903: is propoxylated tolylene di-amine with an OH-number of approximately 440 mg KOH/g, available from The Dow Chemical Company.
- Polyester-A: is a phthahalic anhydride/diethylene glycol polyester with a functionality of about 2 and a hydroxyl number of 315 mg KOH/g
- Polyester-B: is a phthahalic anhydride/1,2-butanediol/glycerin polyester with a hydroxyl number of 270 mg KOH/g and a functionality of about 2.7
- Polyester-C: is a phthahalic anhydride/diethylene glycol/glycerine polyester with a functionality of about 2.7 and a hydroxyl number of 270 mg KOH/g.
- Polyester-D: is a terephtalic acid/diethylene glycol/glycerin derived polyester with a functionality of about 2.7 and a hydroxyl number of 270 mg KOH/g.
- Polycat™ 5: is an amine catalyst (pentamethyldiethylene triamine) available from Air Products & Chemicals Inc.
- Polycat™ 8: is an amine catalyst (N,N-dimethylcyclohexyl amine) available from Air Products Chemical Inc.
- Polycat™ 41: is an amine catalyst (1,3,5-tris (3-(dimethylamino)propyl hexahydro-s-triazine) available from Air Products & Chemicals Inc.
- Dabco™ TMR-30: is a catalyst (Tris (dimethylaminomethyl) phenol), available from Air Products & Chemicals Inc.
- Dabco™ K2097: is a catalyst (Potassium Actuate in DEG) available from Air Products & Chemicals Inc.
- Silicone surfactant-A: is a rigid foam surfactant available from Evonik.
- Silicone surfactant-B: is a rigid foam surfactant available from Momentive.
- Silicone surfactant-C: is a rigid foam surfactant available from Evonik.
- VORATE* SD 100: is polymeric methylene diphenylisocyanate with a functionality of approximately 2.7 available from The Dow Chemical Company as.
*VORANOL, TERCARCOL, and VORATE are all Trademarks of The Dow Chemical Company

Five example foams (designated as 1-5), and four comparative foams (designated as "C1-C4"), are prepared using the formulation amounts shown in Table 1. A high pressure Cannon machine equipped with a mix-head is attached to a mold injection hole, in a laboratory where the atmospheric pressure is about 1,000 mbar (hPa). The polyol system and additional formulation components are premixed and then injected, simultaneously with the isocyanate component, into a Brett mold at a mix-head pressure of at least 90 mbar. The Brett mold is made of aluminum with dimensions of 200x20x5 cm with venting holes at the top. The foams produced in this Brett mold are used to measure thermal conductivity (also termed "lambda"), compression strength, molded density, and density distribution. The temperature of the mold is about 45°C. A release agent is applied to the mold to facilitate demolding.

Foam samples are cut from the core of the molded part 24 hours after foam production and these samples are used for testing immediately after cutting. Lambda is measured at 10°C (average plate temperature) according to ISO 12939-01/ DIN 52612, using a Lasercomp FOX 200. Molded foam density and free rise foam densities are measured according to ASTM 1622-88. Foam compressive strength in kPa is measured according to DIN 53421-06-84. Values reported are an average of 5 samples taken from various positions of the Brett mold.
Some other parameters determined during the foaming experiments are:
- Free Rise Density: The density measured from a 100x100x100 mm block obtained from the center of a free rising foam (at ambient air-pressure) produced from a total system formulation weight of 300 grams or more. FRD is reported in kg/m³.
- Minimum Fill Density: The density determined from the minimum weight needed to fill the mold completely and the volume of this mold. MFD may be extrapolated from Brett length if the Brett is filled by more than 95%. MFD is reported in kg/m³.
- Molded Density: The density determined from the injected weight in the mold and the volume of this mold. MD is reported in kg/m³. The measured molded density is determined from the average of at least 5 samples of 100x100x"thickness" in mm (including skin) by weighing the samples and dividing the weight of each sample by the sample's measured volume.

For the demold experiments a 28-liter "jumbo" mold, dimensions 70x40x10 cm, coated with release agent is conditioned to a temperature of 45°C. A foam formulation is injected into the mold with an overpack-level of 115%. The overpack-level is defined as molded density divided by minimum fill density. After a period of 4, 6 or 7 minutes, the foam is removed from the mold and the thickness of the foam is measured. After a further 24 hours, the foam thickness is re-measured. The difference between the thickness after 24 hours and the initial thickness (=10 cm) is an indication of the post-demold expansion of the foam. The demold time is considered to be sufficiently long if the post-demold expansion is no more than 4 mm on this test.

Rigid foams are produced using the formulations given in Table 1

**TABLE 1**

| | **C1** | **C2** | **C3** | **C4** | **1** | **2** | **3** | **4** | **5** | **C5** | **6** |
|---|---|---|---|---|---|---|---|---|---|---|---|
| Voranol RN 482 | 64.1 | 46 | 46 | 46 | 46 | 45 | 45 | 46 | 46.5 | 40 | 41 |
| Voranol CP 1055 | 25 | 13.6 | 10 | 10 | 8 | 10 | 9 | 8 | 7.5 | 9 | 7.5 |
| Voranol 1010L | | 6 | | 6 | 6 | 6 | 6 | 6 | 6 | 9 | 7 |
| Tercarol 5903 | | 18 | 15 | 18 | 19 | 18 | 19 | 19 | 19 | 35 | 31 |
| Voranol RA 500 | | | 10.4 | | | | | | | | |
| Voranol RA 640 | 5 | | | | | | | | | | |
| Voranol RN 490 | | 9 | | | | | | | | | |
| | | | | | | | | | | | |
| Polyester A | | | 12.5 | 13 | | | | | | | |
| Polyester B | | | | | 14 | 14 | | | | | |
| Polyester C | | | | | | | 14 | 14 | | | |
| Polyester D | | | | | | | | | 14 | | 7.4 |
| | | | | | | | | | | | |
| Polycat 5 | 1.4 | 1.3 | 1.3 | 1 | 1.1 | 1 | 1.1 | 1.2 | 1.2 | 0.7 | 0.8 |
| Polycat 8 | | 1.3 | | 1.2 | 1.1 | 1.2 | 1.1 | 1 | 1 | 1 | |
| Polycat 41 | | 0.6 | | 0.6 | 0.5 | 0.6 | 0.6 | 0.5 | 0.5 | | 0.6 |
| Dabco TMR 30 | 0.7 | | 0.4 | | | | | | | 0.7 | |
| Dabco K 2097 | | | 0.2 | | | | | | | 0.2 | 0.3 |
| | | | | | | | | | | | |
| Silicone Surfactant -A | 1.5 | | 2 | | 2.5 | 2.4 | | | | 2 | 2 |
| Silicone Surfactant - B | | 2.4 | | 2.4 | | | 2.4 | | | | |
| Silicone Surfactant - C | | | | | | | | 2.5 | 2.5 | | |
| | | | | | | | | | | | |
| Water | 2.3 | 1.8 | 2.2 | 1.8 | 1.8 | 1.8 | 1.8 | 1.8 | 1.8 | 2.4 | 2.4 |
| Cyclo-Pentane | 13 | 14.5 | 15 | 14.5 | 13.5 | 15.5 | 15 | 15 | 16 | 15 | 15 |
| | | | | | | | | | | | |
| Voratec SD 100 | 144 | 134 | 145 | 132 | 119 | 132 | 130 | 132 | 133 | 145 | 145 |
| Index | 1.15 | 1.15 | 1.15 | 1.15 | 1.04 | 1.15 | 1.15 | 1.15 | 1.15 | 1.15 | 1.15 |

The properties of the foams produced are given in Table 2.

**TABLE 2**

| | **C1** | **C2** | **C3** | **C4** | **1** | **2** | **3** | **4** | **5** | **C5** | **6** |
|---|---|---|---|---|---|---|---|---|---|---|---|
| Gel-time | 43 | 35 | 33 | 31 | 31 | 29 | 27 | 28 | 28 | 35 | 32 |
| Free rise Density | 22.0 | 24.9 | 23.4 | 24 | 22.5 | 21.5 | 22.5 | 23.4 | 21.7 | 21.4 | 22.3 |
| Minimum Fill Density | 29.6 | 35.1 | 31.9 | 33.8 | 30.8 | 29.9 | 30.1 | 32.0 | 30.0 | 28.9 | 29.9 |
| Flow-Index | 1.34 | 1.41 | 1.36 | 1.41 | 1.37 | 1.39 | 1.34 | 1.37 | 1.38 | 1.35 | 1.34 |
| | | | | | | | | | | | |
| Molded Density | 33.3 | 38.7 | 37.1 | 39.2 | 35.5 | 34.5 | 34.6 | 36.8 | 34.7 | 31.8 | 34.5 |
| Compr. Str. Average | 133 | 135 | 152 | 159 | 134 | 116 | 114 | | 114 | 110 | 116 |
| Lambda (10) Brett | 19.9 | 19.2 | 18.7 | 18.8 | 18.8 | 18.8 | 18.9 | 18.8 | 18.7 | 19.6 | 19.0 |
| | | | | | | | | | | | |
| Jumbo-Post Expansion | | | | | | | | | | | |
| DMT 4 min. | | | | | | | | | 4.6 | 3.1 | 4.1 |
| DMT 6 min | 4.2 | 3.8 | 5.5 | 5.5 | 4.5 | 3.5 | 3.2 | | 2.6 | 2.1 | |
| DMT 7 min | 2.7 | 3.2 | 4.2 | 4.1 | 3.7 | 2.7 | 2.6 | 2.7 | 2 | | |
| | | | | | | | | | | | |

The results show the formulations containing polyesters (C3, C4, 1-5) have an improved thermal conductivity compared to the control formulations C1 and C2. Polyester having a functionality of greater than 2 produce foams with thermal conductivity similar to the control samples C3 and C4, however; the examples have a significantly reduced demold time as compared to C3 and C4.

Example 6 shows at low levels of the high functional polyester polyol, a significant improvement in thermal conductivity is observed in relation to comparative example 5..

The foregoing examples constitute specific example embodiments of the disclosure. One of ordinary skill in the art having the benefit of the present disclosure would recognize that there are additional examples and embodiments within the scope of this disclosure.

## Claims

1. A process for preparing a rigid polyurethane foam, comprising
A) forming a reactive mixture containing at least
1) a polyol mixture containing
a) from 7 to less than 20 weight percent of a polyester having a nominal functionality of at least 2.5 to 4 and an OH number of 200 to 500 mg KOH/g.
b) from 10 to 50 weight percent of a polyol having a nominal hydroxyl functionality of 3 to 6 and an OH-number of 250 to 600 mg KOH/g. of the type
i) an aromatic amine initiated polyol:
ii) a cylcoaliphatic amine initiated polyol :
iii) a combination of i) and ii
c) from 25 to 60 weight percent of a polyether polyol having a nominal hydroxyl functionality of 6 to 8 and an OH-number of 300 to 700 mg KOH/g.
2) at least one hydrocarbon, hydrofluorocarbon, hydrochlorofluorocarbon, fluorocarbon, dialkyl ether or fluorine-substituted dialkyl ether physical blowing agent; and
3) at least one polyisocyanate; and
B) subjecting the reactive mixture to conditions such that the reactive mixture expands and cures to form a rigid polyurethane foam.

2. The process of claim 1 wherein the blowing agent is a hydrocarbon.

3. The process of any one of claims 1 to 3 wherein the reactive mixture contains water in an amount of 1.2 to 2.5 weight percent of the polyol component.

4. The process of claim 3 wherein the aromatic initiator is a aromatic polycarboyxlic acid, aromatic hydroxycarobyxlic acid, aromatic aminocarboxylic acid, aromatic mono- or polyamine, or a combination thereof.

5. The process of claim 4 wherein the aromatic initiator is selected from the group consisting of 1.2-. 1.3- and 1,4-phenylenediamine: 2.3-. 2.4-. 3.4- and 2.6-toluene diamine: 4.4'-. 2.4'- and 2.2'-diaminodiphenylmethane: polyphenyl-polymethylene-polyamine: and mixtures of two or more of the polyamine.

6. The process of claim 5 wherein the aromatic initiator is 2,3-. 2,4-. 3,4- 2,6-toluene diamine or a combination thereof.

7. The process of claim 6 wherein the aromatic initiator is 85 percent or greater of the ortho isomers.

8. The process of any one of claims 1 to 7 wherein the polyester is produced from bifunctional, trifunctional, and/or tetrafunctional straight, branched or cyclic alcohols having 3 to 9 carbon atoms and poly-functional acid or anhydride having 3 to 12 carbon atoms.

9. The process of claim 8 wherein the alcohol is propane diol, butane diol, pentane diol, dietheylene glycol, polyethylene glycol, hexane diol, 2,2-dimethyl-1,3-propane diols, cyclohexane diols, cyclohexane dimethanol, glycerol, trimethylol propane or a combination thereof.

10. The process of claims 9 where in the alcohol is combination of glycerol and diethylene glycol

11. The process of Claim 8 or 9 wherein the poly-functional acid or anhydride is phthalic acid, phthalic anhydride, isophthalic acid, terephthalic acid, hexahydrophthalic acid, tetrachlorophthalic anhydride, hexahydrophthalic anhydride, pyromellitic anhydride, succinic acid, azeleic acid, adipic acid, 1,4-cyclohexanedicarboxylic acid, citric acid, trimellitic anhydride or a combination thereof.

12. The process of any of claims 1 to 11 wherein the isocyanate index is from 90 to 180.

13. The process of any of claims 1 to 11 wherein the initiator of polyol component c) is sorbitol and wherein the reaction mixture contains from 10 to 30 weight percent of at least one polyol d) wherein the polyol d) has a nominal functionality of 2 to 3 and a hydroxyl number of 80 to 200.

14. The process of any one of claims 1 to 13 wherein the thermal conductivity is less than 20 mW/m-°K measured at 10°C according to ISO 12939-01/DIN 52612.

15. The process of any one of claims 1 to 14 wherein the polyol mixture contains from 10 to less than 20 weight percent of at least one polyester polyol.

## Patentansprüche

1. Ein Verfahren zum Herstellen eines Polyurethanhartschaums, das Folgendes beinhaltet:
A) Bilden einer reaktiven Mischung, die mindestens Folgendes enthält:
1) eine Polyolmischung, die Folgendes enthält:
a) zu von 7 bis weniger als 20 Gewichtsprozent einen Polyester, der eine nominelle Funktionalität von mindestens 2,5 bis 4 und eine OH-Zahl von 200 bis 500 mg KOH/g aufweist;
b) zu von 10 bis 50 Gewichtsprozent ein Polyol, das eine nominelle Hydroxylfunktionalität von 3 bis 6 und eine OH-Zahl von 250 bis 600 mg KOH/g aufweist, der folgenden Art:
i) ein durch ein aromatisches Amin initiiertes Polyol;
ii) ein durch ein cycloaliphatisches Amin initiiertes Polyol;
iii) eine Kombination von i) und ii);
c) zu von 25 bis 60 Gewichtsprozent ein Polyetherpolyol, das eine nominelle Hydroxylfunktionalität von 6 bis 8 und eine OH-Zahl von 300 bis 700 mg KOH/g aufweist;
2) mindestens ein physikalisches Treibmittel aus Kohlenwasserstoff, Fluorkohlenwasserstoff, Fluorchlorkohlenwasserstoff, Fluorkohlenstoff, Dialkylether oder fluorsubstituiertem Dialkylether; und
3) mindestens ein Polyisocyanat; und
B) Aussetzen der reaktiven Mischung gegenüber derartigen Bedingungen, dass sich die reaktive Mischung ausdehnt und härtet, um einen Polyurethanhartschaum zu bilden.

2. Verfahren gemäß Anspruch 1, wobei das Treibmittel ein Kohlenwasserstoff ist.

3. Verfahren gemäß einem der Ansprüche 1 bis 3, wobei die reaktive Mischung Wasser in einer Menge von 1,2 bis 2,5 Gewichtsprozent der Polyolkomponente enthält.

4. Verfahren gemäß Anspruch 3, wobei der aromatische Initiator eine aromatische Polycarbonsäure, eine aromatische Hydroxycarbonsäure, eine aromatische Aminocarbonsäure, ein aromatisches Mono- oder Polyamin oder eine Kombination davon ist.

5. Verfahren gemäß Anspruch 4, wobei der aromatische Initiator ausgewählt ist aus der Gruppe, bestehend aus 1,2-, 1,3- und 1,4-Phenylendiamin; 2,3-, 2,4-, 3,4- und 2,6-Toluendiamin; 4,4'-, 2,4'- und 2,2'-Diaminodiphenylmethan; Polyphenyl-Polymethylen-Polyamin; und Mischungen von zwei oder mehr der Polyamine.

6. Verfahren gemäß Anspruch 5, wobei der aromatische Initiator 2,3-, 2,4-, 3,4-, 2,6-Toluendiamin oder eine Kombination davon ist.

7. Verfahren gemäß Anspruch 6, wobei der aromatische Initiator zu 85 Prozent oder höher die ortho-Isomere ist.

8. Verfahren gemäß einem der Ansprüche 1 bis 7, wobei der Polyester aus bifunktionellen, trifunktionellen und/oder tetrafunktionellen geraden, verzweigten oder zyklischen Alkoholen mit 3 bis 9 Kohlenstoffatomen und polyfunktioneller Säure oder polyfunktionellem Anhydrid mit 3 bis 12 Kohlenstoffatomen produziert wird.

9. Verfahren gemäß Anspruch 8, wobei der Alkohol Propandiol, Butandiol, Pentandiol, Diethylenglykol, Polyethylenglykol, Hexandiol, 2,2-Dimethyl-1,3-propandiole, Cyclohexandiole, Cyclohexandimethanol, Glycerol, Trimethylolpropan oder eine Kombination davon ist.

10. Verfahren gemäß Anspruch 9, wobei in dem Alkohol eine Kombination von Glycerol und Diethylenglykol vorliegt.

11. Verfahren gemäß Anspruch 8 oder 9, wobei die polyfunktionelle Säure oder das polyfunktionelle Anhydrid Phthalsäure, Phthalsäureanhydrid, Isophthalsäure, Terephthalsäure, Hexahydrophthalsäure, Tetrachlorphthalsäureanhydrid, Hexahydrophthalsäureanhydrid, Pyromellitsäureanhydrid, Bernsteinsäure, Azelainsäure, Adipinsäure, 1,4-Cyclohexandicarbonsäure, Zitronensäure, Trimellitsäureanhydrid oder eine Kombination davon ist.

12. Verfahren gemäß einem der Ansprüche 1 bis 11, wobei der Isocyanatindex von 90 bis 180 beträgt.

13. Verfahren gemäß einem der Ansprüche 1 bis 11, wobei der Initiator der Polyolkomponente c) Sorbitol ist und wobei die Reaktionsmischung zu von 10 bis 30 Gewichtsprozent mindestens ein Polyol d) enthält, wobei das Polyol d) eine nominelle Funktionalität von 2 bis 3 und eine Hydroxylzahl von 80 bis 200 aufweist.

14. Verfahren gemäß einem der Ansprüche 1 bis 13, wobei die Wärmeleitfähigkeit weniger als 20 mW/m-°K beträgt, gemessen bei 10 °C gemäß ISO 12939-01/DIN 52612.

15. Verfahren gemäß einem der Ansprüche 1 bis 14, wobei die Polyolmischung zu von 10 bis weniger als 20 Gewichtsprozent mindestens ein Polyesterpolyol enthält.

## Revendications

1. Un procédé pour préparer une mousse rigide de polyuréthane, comprenant
A) la formation d'un mélange réactif contenant au moins
1) un mélange de polyol contenant
a) de 7 à moins de 20 pour cent en poids d'un polyester ayant une fonctionnalité nominale allant d'au moins 2,5 à 4 et un nombre de OH allant de 200 à 500 mg KOH/g
b) de 10 à 50 pour cent en poids d'un polyol ayant une fonctionnalité hydroxyle nominale allant de 3 à 6 et un nombre de OH allant de 250 à 600 mg KOH/g du type suivant
i) un polyol amorcé par une amine aromatique ;
ii) un polyol amorcé par une amine cycloaliphatique ;
iii) une combinaison de i) et ii)
c) de 25 à 60 pour cent en poids d'un polyol de polyéther ayant une fonctionnalité hydroxyle nominale allant de 6 à 8 et un nombre de OH allant de 300 à 700 mg KOH/g
2) au moins un agent d'expansion physique hydrocarbure, hydrofluorocarbure, hydrochlorofluorocarbure, fluorocarbure, éther de dialkyle ou éther de dialkyle substitué par du fluor ; et
3) au moins un polyisocyanate ; et
B) la soumission du mélange réactif à des conditions telles que le mélange réactif subisse une expansion et durcisse pour former une mousse rigide de polyuréthane.

2. Le procédé de la revendication 1 dans lequel l'agent d'expansion est un hydrocarbure.

3. Le procédé de l'une quelconque des revendications 1 à 3 dans lequel le mélange réactif contient de l'eau dans une quantité allant de 1,2 à 2,5 pour cent en poids du composant polyol.

4. Le procédé de la revendication 3 dans lequel l'amorceur aromatique est un acide polycarboxylique aromatique, un acide hydroxycarboxylique aromatique, un acide aminocarboxylique aromatique, une mono- ou polyamine aromatique, ou une combinaison de ceux-ci.

5. Le procédé de la revendication 4 dans lequel l'amorceur aromatique est choisi dans le groupe constitué de la 1,2-, 1,3- et 1,4-phénylènediamine ; de la 2,3-, 2,4-, 3,4- et 2,6-toluène diamine ; du 4,4'-, 2,4'- et 2,2'-diaminodiphénylméthane ; de la polyphényl-polyméthylène-polyamine ; et de mélanges de deux des polyamines ou plus.

6. Le procédé de la revendication 5 dans lequel l'amorceur aromatique est la 2,3-, 2,4-, 3,4-, 2,6-toluène diamine ou une combinaison de celles-ci.

7. Le procédé de la revendication 6 dans lequel l'amorceur aromatique est constitué à 85 pour cent ou plus d'isomères ortho.

8. Le procédé de l'une quelconque des revendications 1 à 7 dans lequel le polyester est produit à partir d'alcools linéaires, ramifiés ou cycliques bifonctionnels, trifonctionnels et/ou tétrafonctionnels ayant de 3 à 9 atomes de carbone et d'acide ou d'anhydride polyfonctionnels ayant de 3 à 12 atomes de carbone.

9. Le procédé de la revendication 8 dans lequel l'alcool est le propane diol, le butane diol, le pentane diol, le diéthylène glycol, le polyéthylène glycol, l'hexane diol, des 2,2-diméthyl-1,3-propane diols, des cyclohexane diols, le cyclohexane diméthanol, le glycérol, le triméthylol propane ou une combinaison de ceux-ci.

10. Le procédé de la revendication 9 dans lequel l'alcool est une combinaison de glycérol et de diéthylène glycol.

11. Le procédé de la revendication 8 ou de la revendication 9 dans lequel l'acide polyfonctionnel ou l'anhydride polyfonctionnel est l'acide phtalique, l'anhydride phtalique, l'acide isophtalique, l'acide téréphtalique, l'acide hexahydrophtalique, l'anhydride tétrachlorophtalique, l'anhydride hexahydrophtalique, l'anhydride pyromellitique, l'acide succinique, l'acide azélaïque, l'acide adipique, l'acide 1,4-cyclohexane dicarboxylique, l'acide citrique, l'anhydride trimellitique ou une combinaison de ceux-ci.

12. Le procédé de n'importe lesquelles des revendications 1 à 11 dans lequel l'indice d'isocyanate va de 90 à 180.

13. Le procédé de n'importe lesquelles des revendications 1 à 11 dans lequel l'amorceur du composant polyol c) est le sorbitol et dans lequel le mélange réactionnel contient de 10 à 30 pour cent en poids d'au moins un polyol d) dans lequel le polyol d) a une fonctionnalité nominale allant de 2 à 3 et un nombre hydroxyle allant de 80 à 200.

14. Le procédé de l'une quelconque des revendications 1 à 13 dans lequel la conductivité thermique est inférieure à 20 mW/m-°K mesurée à 10 °C selon l'ISO 12939-01/DIN 52612.

15. Le procédé de l'une quelconque des revendications 1 à 14 dans lequel le mélange de polyol contient de 10 à moins de 20 pour cent en poids d'au moins un polyol de polyester.
